# EUROPÄISCHE PATENTSCHRIFT

(11) **EP 4 187 039 B1**
(45) Veröffentlichungstag und Bekanntmachung des Hinweises auf die Patenterteilung: **25.09.2024**
(21) Anmeldenummer: 21210651.2
(22) Anmeldetag: 26.11.2021
(51) Int. Cl.: E04F 10/06, E06B 9/58

(54) **FLÄCHENGEBILDEANORDNUNG**
FLAT ARTICLE ASSEMBLY
AMÉNAGEMENT DE STRUCTURE PLATE

(43) Veröffentlichungstag der Anmeldung: 31.05.2023
(73) Patentinhaber: Gluetex GmbH, 79771 Klettgau Erzingen (DE)
(72) Erfinder: Heil, Dietmar, 8197 Rafz (CH)
(74) Vertreter: Gachnang AG Patentanwälte

(56) Entgegenhaltungen:
- EP-A1- 2 492 433
- DE-A1- 19 739 919

## Beschreibung

Gegenstand der Erfindung ist eine Flächengebildeanordnung, umfassend ein Flächengebilde und mindestens ein Randorgan, das entlang eines Randabschnitts des Flächengebildes mit dem Flächengebilde verbunden ist, gemäss den Merkmalen des Patentanspruchs 1.

Beispiele solcher Flächengebildeanordnungen sind Markisentücher. Diese können eine oder mehrere Tuchbahnen umfassen. Bei solchen Markisentüchern können ein oder mehrere Randabschnitte ein Randorgan umfassen, z.B. einen in einem Kedersaum aufgenommenem Keder zum Befestigen an einer Tuchwelle oder an einem Ausfallprofil. Vertikalmarkisen umfassen in der Regel seitliche Führungselemente, mit denen das Markisentuch zwischen zwei seitlichen Führungsschienen geführt verschiebbar gehalten werden kann. Insbesondere kann das Markisentuch für diesen Zweck an den seitlichen Rändern Keder analog zu jenen eines Reissverschlusses umfassen. In den Randbereichen mit den Reissverschlusskedern ist das Markisentuch dicker als im dazwischenliegenden mittleren Bereich. Beim Aufwickeln des Markisentuchs auf eine Wickelwelle ist deshalb der Platzbedarf in den Randbereichen grösser als im mittleren Bereich. Unterschiedliche auf das Flächengebilde wirkende Zugkräfte können in den Randbereichen des Flächengebildes eine Verwellung verursachen.

Aus der DE19739919A1 ist ein Sonnenrollo mit einer aufwickelbaren Rollobahn bekannt, deren sich gegenüberliegende Seitenränder leicht biegbare Versteifungen aus Kunststoff umfassen. Die versteiften Seitenränder können auf ein Wickelrohr aufgewickelt und zum Führen in seitlichen Führungsschienen abgeknickt werden.

DE102004017459A1 offenbart ein Schiebedachsystem mit einem flexiblen Flächengebilde. Bei jedem der Längsränder dieses Flächengebildes ist jeweils nur die äussere Hälfte eines aufrollbaren dünnen Metallstreifens aus Federblech aufgeklebt. Zum Führen in seitlichen Führungen kann die freie innere Hälfte dieser Metallstreifen formschlüssig in Anlage mit diesen seitlichen Führungen gebracht werden.

DE102005048207B3 betrifft eine Rolloanordnung für ein Kraftfahrzeug. Eine Rollobahn umfasst entlang ihrer Längskanten flexible metallische Führungsbänder. Diese können in seitliche Taschen der Rollobahn eingenäht oder auf die Rollobahn aufgeklebt sein. Werden solche Flächengebildeanordnungen auf eine Wickelwelle aufgewickelt, so hat das aufgewickelte Flächengebilde aufgrund der grösseren Materialdicke in den Randbereichen grössere Aussendurchmesser als im dazwischenliegenden mittleren Bereich. Dies kann beim Flächengebilde einen Verzug und unterwünschte Welligkeit bewirken.

EP1553259A1 schlägt bei einer ähnlichen Anordnung vor, bei den Endbereichen einer Wickelwelle Ausnehmungen für die dickeren Endbereiche auszubilden oder die dickeren Bereiche axial über die Enden der Wickelwelle hervorragen zu lassen.

DE102016120299A1 offenbart ein Insektenschutzrollo, wobei entlang der Längsränder einer Gewebebahn je ein textiler Verbindungsstreifen eines Führungsbandes mit dem Gewebe der Gewebebahn verschweisst ist. Jedes Führungsband umfasst an seinem aussenliegenden Rand eine Reihe von abstehenden Reissverschlusszähnen, die gemeinsam eine Führungsgliederreihe bilden zum Führen in seitlichen Führungsschienen. Die Endbereiche der Wickelwelle umfassen Kopfstücke mit konkav gekrümmten Tragrippen. Diese stützen beim Aufwickeln des Insektenschutzrollos dessen dickeren Endbereiche, sodass diese mit einer definierten Wellung aufgewickelt werden.

EP 2 492 433 A1 offenbart eine Flächengebildeanordnung gemäss dem Oberbegriff des Anspruchs 1.

Eine Aufgabe der vorliegenden Erfindung ist es, eine Flächengebildeanordnung zu schaffen, die ein Flächengebilde und mindestens ein im Randbereich des Flächengebildes mit diesem Flächengebilde verbundenes Randorgan umfasst und verzugsarm auf eine zylindrische Welle aufwickelbar ist. Diese Aufgabe wird gelöst durch eine Flächengebildeanordnung mit den Merkmalen des Patentanspruchs 1.

Die Flächengebildeanordnung umfasst ein flexibles primäres Flächengebilde und mindestens ein Randorgan, das entlang eines Randabschnitts des primären Flächengebildes angeordnet und mit diesem verbunden ist.

Das primäre Flächengebilde kann beispielsweise ein auf eine Wickelwelle aufrollbares Markisentuch sein. Zumindest entlang der beiden Seitenränder ist je ein Randorgan mit der jeweiligen Gewebebahn des Markisentuchs verbunden. Jedes Randorgan umfasst zwei bandartige Schenkel, die um eine gemeinsame Schwenkachse schwenkbar miteinander verbunden sind. Die Schwenkachse verläuft in Längsrichtung der beiden Schenkel. Beim ersten Schenkel ist die Schwenkachse im Wesentlichen bei einem der Längsränder dieses Schenkels angeordnet. Beim zweiten Schenkel verläuft die Schwenkachse je nach Ausführungsform des Randorgans in einem mittleren Bereich zwischen den beiden Längsrändern oder alternativ bei einem der Längsränder dieses Schenkels. Je nach Ausführungsform des Randorgans kann dessen Querschnitt, wenn der zweite Schenkel orthogonal zum ersten Schenkel ausgerichtet ist, T-förmig oder L-förmig sein. Bei Ausführungsformen mit T-förmigem Querschnitt ragt auf beiden Seiten des ersten Schenkels je ein Abschnitt des zweiten Schenkels hervor, bei Ausführungsformen mit L-förmigem Querschnitt nur auf einer Seite. Der maximal nutzbare Schwenkbereich ist begrenzt durch gegenseitiges Anliegen der beiden Schenkel aneinander. Er kann bei T-förmigen Anordnungen näherungsweise 180° betragen.

Bei einer Ausführungsform des Randorgans In einer dreidimensionalen ersten Konfiguration, wobei der zweite Schenkel aus der Ebene des ersten Schenkels hervorragt, kann das Randorgan als Führungselement zum Führen des Markisentuchs bzw. allgemein des primären Flächengebildes in einer Führungsschiene mit z.B. C-förmigem Querschnitt verwendet werden. Dabei wird der zweite Schenkel des Randorgans formschlüssig im Inneren des Führungsprofils gehalten bzw. geführt. Der erste Schenkel ist durch einen Spalt zwischen den sich gegenüberliegenden Längsrändern des Führungsprofils hindurchgeführt und mit dem Rand der Gewebebahn des Markisentuchs verbunden. Der zweite Schenkel des Randorgans ist ausreichend biegesteif ausgebildet, sodass er auch beim Auftreten von Windböen und damit verbundenen Zugkräften des Markisentuchs sicher im Führungsprofil gehalten bleibt. Solche Randorgane können verschleissarm und geräuscharm entlang der Führungsprofile verschoben werden.

Ein Aufrollen der Flächengebildeanordnung auf eine quer zur Längsrichtung der Randorgane ausgerichtete Wickelwelle ist bei dieser Konfiguration des Randorgans hingegen nicht möglich.

In mindestens einer weiteren Konfiguration desselben Randorgans kann dessen zweiter Schenkel soweit geschwenkt oder umgeklappt sein, dass er im Wesentlichen parallel zum ersten Schenkel und zum Gewebe des Markisentuchs ausgerichtet ist. In dieser flachen weiteren Konfiguration kann die Flächengebildeanordnung auf eine quer zur Längsrichtung der Randorgane ausgerichtete Wickelwelle aufgewickelt werden.

Vorzugsweise sind die Schenkelstärken so bemessen, dass die maximale Dicke des Randorgans in dieser weiteren Konfiguration kleiner oder gleich gross ist wie die Dicke des primären Flächengebildes, mit dem das Randorgan verbunden ist. In dieser Konfiguration kann die Flächengebildeanordnung verzugsfrei und ohne Falten- oder Wellenbildung des primären Flächengebildes auf eine Wickelwelle aufgewickelt werden.

In Längsrichtung des Randorgans ist dessen Konfiguration lokal veränderbar. Insbesondere können Randorgane eines Markisentuchs in einem ersten Abschnitt in der ersten Konfiguration in seitlichen Führungsschienen geführt und in einem zweiten Abschnitt in der zweiten Konfiguration auf eine Wickelwelle aufgerollt sein. In einem vergleichsweise kurzen Übergangsabschnitt wird die Ausrichtung des zweiten Schenkels relativ zum ersten Schenkel durch Torsion von der einen in die andere Konfiguration übergeführt. Beim Aufwickeln bzw. Abwickeln des Markisentuchs ändern sich die Lage des Übergangsbereichs und die Anteile der Randorgane in der ersten Konfiguration und der zweiten Konfiguration kontinuierlich.

Das Randorgan umfasst ein sehr dünnes, bandartiges sekundäres Flächengebilde, das quer zu seiner Längsrichtung eine Einlage umschlingt bzw. umhüllt und in diesem Bereich zusammen mit dieser Einlage den zweiten Schenkel definiert. An den Umschlingungsbereich angrenzende Endabschnitte des sekundären Flächengebildes bilden gemeinsam den ersten Schenkel. Sie sind zumindest in einem an die Einlage angrenzenden Abschnitt miteinander verklebt oder in anderer Weise miteinander verbunden, z.B. verschweisst oder vernäht. In diesem Abschnitt umfasst der erste Schenkel demnach zwei Lagen des sekundären Flächengebildes. Vorzugsweise ist das sekundäre Flächengebilde auch mit der Einlage verbunden, z.B. verklebt. Dadurch wird sichergestellt, dass die Einlage in einer definierten Lage relativ zum sekundären Flächengebilde angeordnet ist.

Der erste Schenkel kann auf seiner ganzen Breite oder alternativ nur auf einem Teil davon zweilagig ausgebildet sein. Mit anderen Worten können die beiden Endabschnitte des sekundären Flächengebildes gleiche oder unterschiedliche Breiten aufweisen.

Die maximale Dicke bzw. Stärke des Randorgans, wenn der zweite Schenkel umgeklappt bzw. parallel zum ersten Schenkel ausgerichtet ist, entspricht etwa dem Vierfachen der Dicke des sekundären Flächengebildes zuzüglich der Dicke der Einlage und gegebenenfalls der Dicke der jeweiligen Klebstoffschichten. Mit geeigneten Klebstoffen kann die Dicke der Klebstoffschichten sehr dünn sein, sodass sie im Vergleich zu den Dicken des sekundären Flächengebildes und der Einlage vernachlässigt werden können.

Die maximale Dicke des Randorgans in der Konfiguration mit parallel ausgerichteten Schenkeln ist vergleichsweise klein. Sie kann z.B. in der Grössenordnung der Dicke des primären Flächengebildes liegen. Sie ist vorzugsweise kleiner oder gleich gross wie die Dicke oder die maximale Dicke des primären Flächengebildes. Bei Markisentüchern mit mindestens zwei Stoffbahnen, die in einem Überlappungsbereich miteinander verbunden sind, ist die maximale Dicke des primären Flächengebildes etwa doppelt so gross wie die einfache Dicke des Markisentuchs.

Das sekundäre Flächengebilde kann z.B. ein Gewebe, eine Folie, ein Laminat oder eine Kombination aus mindestens zwei solcher Materialien umfassen. Das bandartige sekundäre Flächengebilde kann einheitlich oder lokal unterschiedlich ausgebildet sein. Es kann insbesondere quer zu seiner Längsrichtung Zonen mit unterschiedlichen Eigenschaften aufweisen. Es kann beispielsweise einen oder mehrere Abschnitte bzw. Längsstreifen mit einem bidirektional elastischen Gewebe umfassen. Dabei können die elastischen Eigenschaften in Längsrichtung und in Querrichtung gleich oder unterschiedlich sein. Unterschiedliche Eigenschaften einzelner Abschnitte des sekundären Flächengebildes können z.B. dadurch bewirkt werden, dass das sekundäre Flächengebilde in diesen Bereichen eine unterschiedliche Anzahl Schichten bzw. Materiallagen und/oder unterschiedliche Materialien wie z.B. PET Monofilament und/oder unterschiedliche Strukturen wie z.B. Einschnitte oder Ausnehmungen umfasst. Dies gilt sinngemäss auch für Abschnitte von Randorganen mit solchen sekundären Flächengebilden.

Bei weiteren Ausführungsformen kann das sekundäre Flächengebilde gesamtflächig oder zumindest in einem Abschnitt bzw. Streifen ein dünnes, steifes Laminat umfassen. Dieses kann insbesondere Fasern mit einer hohen Zugfestigkeit wie z.B. aus HPPE (High Performance Polyethylene) gefertigte Dyneema^{®}-Fasern, Aramidfasern oder Kohlenstofffasern umfassen. Eigenschaften wie Biegesteifigkeit, Elastizität, Zugfestigkeit, UV-Stabilität, Chemikalienresistenz, Beständigkeit gegenüber Umwelteinflüssen und dergleichen können durch geeignete Materialien oder Materialkombinationen entsprechend der jeweiligen Anforderungen definiert werden.

Das bandartige sekundäre Flächengebilde kann z.B. zwei beidseits an einen mittleren Streifen angrenzende äussere Streifen umfassen, die im Vergleich zum mittleren Streifen eine grössere oder kleinere Elastizität aufweisen.

Bei einem sekundären Flächengebilde, das eine Schicht bzw. Lage eines Materials mit geringer Dehnbarkeit umfasst, kann dessen Beweglichkeit lokal oder bereichsweise durch Unterbrechungen oder Ausnehmungen, insbesondere durch Einschnitte erhöht werden. So kann das sekundäre Flächengebilde z.B. entlang seiner Längsränder Einschnitte aufweisen, die in gleichmässigen oder ungleichmässigen gegenseitigen Abständen und mit gleichen oder unterschiedlichen Ausrichtungen angeordnet sind. Dadurch können Eigenschaften wie die Beweglichkeit des sekundären Flächengebildes im Verbindungsbereich mit dem primären Flächengebilde an entsprechende Eigenschaften des primären Flächengebildes angepasst werden. Zusätzlich oder alternativ kann das sekundäre Flächengebilde auch im Bereich des ersten Schenkels und/oder des zweiten Schenkels eines Randorgans Strukturen wie z.B. Ausnehmungen oder Einschnitte umfassen.

Bei Markisen umfassen die ersten Schenkel jedes der Randorgane vorzugsweise einen quer zur Längsrichtung elastisch verformbaren Abschnitt. Bei einem in seitlichen Führungsschienen geführten Stoffbehang kann so die Breitentoleranz erhöht und die Windstabilität verbessert werden.

Mindestens eine Lage des sekundären Flächengebildes überlappt mit einem Randstreifen des primären Flächengebildes und ist mit diesem z.B. mittels eines Heissklebstoffs verbunden. Optional können zwei Lagen des sekundären Flächengebildes an sich gegenüberliegenden Oberflächen mit einem Randstreifen des primären Flächengebildes verbunden sein. Der Rand des primären Flächengebildes ist dadurch geschützt zwischen den beiden Lagen des sekundären Flächengebildes angeordnet. Solche beidseitigen Verbindungen sind sehr sicher und bieten eine sehr hohe Ausreissfestigkeit.

Bei alternativen Ausführungsformen können eine oder beide Lagen des sekundären Flächengebildes auch nur einseitig mit dem Randstreifen des primären Flächengebildes verbunden sein. Solche Verbindungen, die z.B. durch Kleben, Heisskleben und/oder Ultraschallschweissen erstellt werden, sind vergleichsweise einfach herstellbar und ebenfalls sicher.

Die vom sekundären Flächengebilde umschlossene Einlage ist dazu bestimmt, dem Randorgan bzw. dessen zweitem Schenkel eine oder mehrere für die jeweilige Anwendung des Flächengebildes erwünschte Eigenschaften zu verleihen. Diese Eigenschaften sind definiert durch Werte oder Wertebereiche von isotropen oder richtungsabhängigen Parametern. Beispiele solcher Parameter sind Dehn-, Schub-, Torsions- und Biegesteifigkeit, Querschnittform, geometrische Abmessungen, Elastizität und elektrische Leitfähigkeit.

Einlagen können insbesondere ebene oder gewölbte flache Bandkörper aus einem Kunststoff wie z.B. PET oder aus einem Metall wie z.B. Federstahl umfassen. Alternativ oder zusätzlich zu solchen Bandkörpern können Einlagen auch Drähte wie z.B. Federstahldrähte und/oder elektrisch gut leitende Kupferdrähte umfassen. Solche Drähte können näherungsweise gerade in Längsrichtung der Einlage oder alternativ innerhalb eines bandförmigen Bereichs mäandrierend oder spiralartig gewunden angeordnet sein. Dadurch kann die Wirkung der Drähte auf die Breite des jeweiligen Bereichs ausgedehnt werden. Solche Anordnungen sind zudem flexibel und unempfindlich gegenüber mechanischen Einwirkungen. Optional können Drahtanordnungen in einer Kunststoffmatrix eingebettet sein. Dadurch wird die Anordnung der Drähte in der vorgegebenen Lage gehalten und gegenüber mechanischen Einwirkungen geschützt.

Alternativ kann die Einlage analog zu einer flexiblen Leiterplatte eine oder mehrere dünne Folien umfassen, wobei bei mindestens einer dieser Folien einseitig oder beidseitig je eine oder mehrere Leiterbahnen angeordnet sind. Solche als Substrat für Leiterbahnen nutzbaren Folien können z.B. aus Polyimid (PI) oder einem Polyester wie z.B. Polyethylenterephtalat (PET) gefertigt sein, insbesondere aus einer biaxial orientierten PolyesterFolie (BO-PET), die eine hohe Zugfestigkeit aufweist. Vorzugsweise sind bei solchen Folien zwei oder mehrere in Längsrichtung der Einlage verlaufende elektrisch leitende Bahnen angeordnet, beispielsweise Bahnen aus gewalztem oder elektrolytisch abgeschiedenem Kupfer.

Einlagen mit elektrisch leitenden Elementen können z.B. zum Durchleiten von elektrischem Strom und/oder von elektrischen Steuersignalen genutzt werden. Entlang der Randorgane können an beliebigen Stellen Verzweigungsleitungen mit den Leitern der Einlage verbunden werden. Solche Verzweigungsleitungen können z.B. Leiterbahnen sein, die quer zur Längsrichtung der Einlage am sekundären Flächengebilde angeordnet und über Kontakte elektrisch leitend mit den jeweiligen Leiterbahnen der Einlage verbunden sind. Das sekundäre Flächengebilde kann insbesondere analog zu einer flexiblen Leiterplatte eine oder mehrere dünne Folien mit je einer oder mehreren einseitig oder beidseitig darauf angeordneten Leiterbahnen umfassen.

Bei weiteren alternativen Ausführungsformen kann das sekundäre Flächengebilde eine oder mehrere vorzugsweise in Längsrichtung durchgehende Leiterbahnen und damit verbundene, in Querrichtung angeordnete elektrische Leiterbahnen als Verzweigungsleitungen umfassen. Dies hat den Vorteil, dass die Verzweigungsleitungen immer zuverlässig mit den jeweiligen Längsleitungen verbunden sind. Randorgane, bei denen elektrische Verbindungsleitungen unterbrechungsfrei nur auf dem sekundären Flächengebilde angeordnet sind, können einfach und kostengünstig hergestellt werden und stellen sichere und zuverlässige elektrische Verbindungsleitungen bereit. Funktionen der Einlage wie z.B. das Bereitstellen eines dünnen, biegesteifen Abschnitts des Randorgans, der auf Zug belastbar ist und in einer Führungsschiene geführt werden kann, können unabhängig von gegebenenfalls erforderlichen elektrischen Verbindungsleitungen optimiert werden.

Bei Markisen mit solchen Randorganen können z.B. Sensoren und/oder Aktoren bzw. Antriebe eines Steuerungssystems an nahezu beliebigen Stellen angeordnet und über die elektrischen Verbindungsleitungen der Randorgane miteinander verbunden werden. Über solche Verbindungsleitungen können ortsfeste und/oder relativ zueinander bewegbare Teile von Steuerungssystemen auf einfache Weise mit Energie gespeist werden und/oder miteinander kommunizieren. Insbesondere können Elemente im Fallprofil einer Markise einfach mit Energie versorgt werden.

Verbindungsleitungen in Randorganen können auch dazu genutzt werden, im Bereich des Flächengebildes photovoltaisch erzeugte elektrische Energie an eine Speichervorrichtung und/oder an elektrische Verbraucher weiterzuleiten.

Im Bereich mindestens eines der beiden Enden kann ein Randorgan z.B. einen Steckverbinder zum Verbinden von elektrischen Leitern des Randorgans mit weiterführenden elektrischen Leitern umfassen.

Bei Markisen mit rechteckigen Markisentüchern können z.B. entlang der beiden Seitenränder Randorgane befestigt sein, die länger sind als die Seitenränder des Markisentuchs und über den vorderen und/oder den hinteren Rand des Markisentuchs hinausragen. Über Steckverbinder können die elektrischen Leitungen des Randorgans einfach mit entsprechenden Steckverbindern bei einer Wickelwelle oder bei einem Ausfallprofil der Markise verbunden werden.

Anhand einiger Figuren wird die Erfindung (ein oder mehrere Ausführungsbeispiele der Erfindung) im Folgenden näher beschrieben. Dabei zeigen
- Figur 1: einen Abschnitt einer Anordnung mit einem am Rand eines Markisentuchs befestigten Randorgan in einer ersten Konfiguration mit zwei orthogonal ausgerichteten Schenkeln,
- Figur 2: den Abschnitt der Anordnung aus Figur 1 in einer zweiten Konfiguration mit parallel ausgerichteten Schenkeln,
- Figur 3: einen vergrösserten Querschnitt der Anordnung in der Konfiguration gemäss Figur 1,
- Figur 4: einen vergrösserten Querschnitt der Anordnung in der Konfiguration gemäss Figur 2,
- Figur 5: eine alternative Anordnung mit einem beidseitig am Markisentuch befestigten Randorgan,
- Figur 6: eine alternative Anordnung mit einem einseitig am Markisentuch befestigten Randorgan,
- Figur 7: eine Anordnung analog zu jener in Figur 4, jedoch mit beidseitig bündig am Markisentuch befestigtem Randorgan,
- Figur 8: einen Detailquerschnitt einer Anordnung mit drei Lagen eines auf eine Wickelwelle aufgewickelten Markisentuchs im Bereich des Randorgans,
- Figur 9: einen Detailquerschnitt einer Anordnung eines Markisentuchs, das mittels eines Randorgans in einer Führungsschiene geführt ist,
- Figur 10: einen Detailquerschnitt im Randbereich eines Markisentuchs mit einem alternativen Randorgan,
- Figur 11: einen Detailquerschnitt im Randbereich eines Markisentuchs mit einem weiteren alternativen Randorgan,
- Figur 12: ein sekundäres Flächengebilde mit Leiterbahnen.

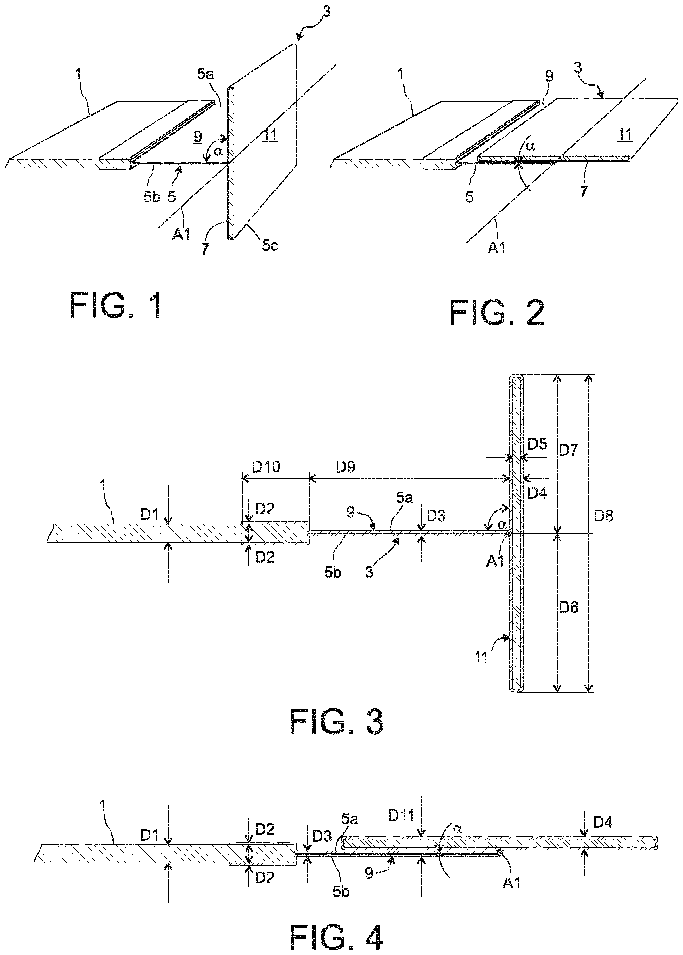

Die Figuren 1 und 2 zeigen in perspektivischer Darstellung einen Randabschnitt eines Markisentuchs bzw. allgemein eines primären Flächengebildes 1 und eines entlang dieses Randabschnitts angeordneten und mit dem primären Flächengebilde 1 verbundenen Randorgans 3. Das Randorgan 3 umfasst ein bandartiges, sehr dünnes sekundäres Flächengebilde 5, beispielsweise ein Gewebe, eine Folie oder ein Laminat mit hoher Zugfestigkeit, und eine längliche Einlage 7, beispielsweise einen dünnen Bandkörper aus einem Kunststoff mit im Vergleich zum sekundären Flächengebilde 5 hoher Biegesteifigkeit. Ein mittlerer Abschnitt 5c des sekundären Flächengebildes 5 ist quer zu seiner Längsrichtung um die Einlage 7 geschlungen, sodass es diese ummantelt bzw. umhüllt und einen zweiten Schenkel 11 des Randorgans 3 definiert. Zwei miteinander verbundene äussere Abschnitte 5a, 5b des sekundären Flächengebildes 5 definieren den ersten Schenkel 9 des Randorgans 3. Der zweite Schenkel 11 ist angrenzend an den ersten Schenkel 9 um eine in Längsrichtung der beiden Schenkel 9, 11 verlaufende Schwenkachse A1 schwenkbar mit dem ersten Schenkel 9 verbunden. Das dünne sekundäre Flächengebilde 5 wirkt im Bereich der Schwenkachse A1 als Filmscharnier. Die genaue Lage der Schwenkachse A1 kann aufgrund von Eigenschaften des sekundären Flächengebildes 5 wie z.B. dessen Dicke D2 und Elastizität in Abhängigkeit des Neigungswinkels α des zweiten Schenkels 11 relativ zum ersten Schenkel 9 leicht variieren. In den Figuren 1 bis 4 ist die Schwenkachse A1 jeweils symbolisch in repräsentativen Lage dargestellt. Die Endbereiche der beiden äusseren Abschnitte 5a, 5b des sekundären Flächengebildes 5 sind z.B. mittels eines Heissklebstoffs überlappend mit sich gegenüberliegenden Oberflächen im Randbereich des primären Flächengebildes 1 verbunden.

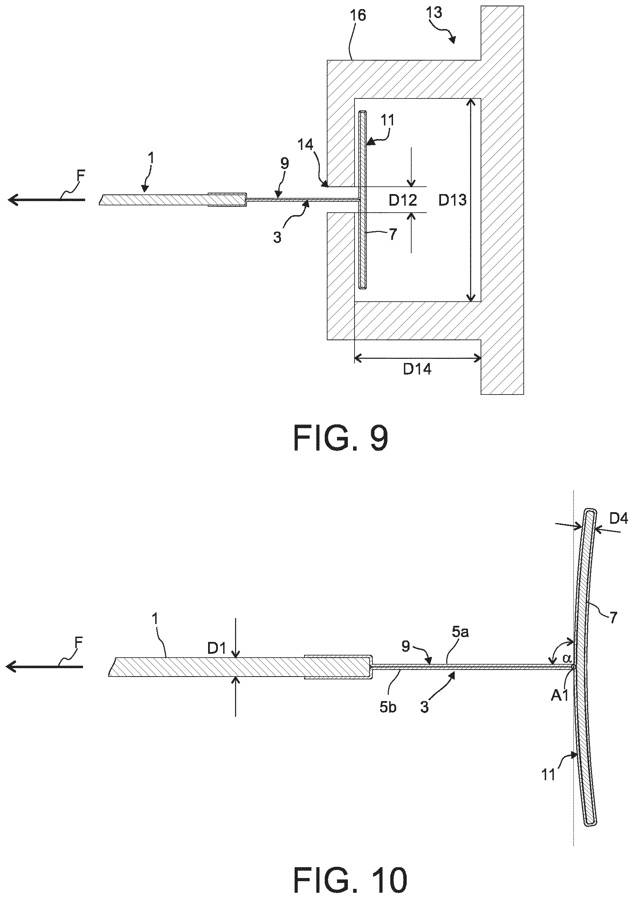

Figur 1 zeigt eine erste Konfiguration der Anordnung, wobei der zweite Schenkel 11 um einen Neigungswinkel α von etwa 90° relativ zum ersten Schenkel 9 ausgerichtet ist. In dieser ersten Konfiguration kann das Randorgan 3 als Mittel zum Halten und Führen des primären Flächengebildes 1 in einer seitlichen Führungsschiene 13 mit C-förmigem Querschnitt genutzt werden (Figur 9).

Figur 2 zeigt die Anordnung in einer zweiten Konfiguration, wobei der zweite Schenkel 11 gegenüber der Konfiguration in Figur 1 um 90° im Uhrzeigersinn umgeklappt und parallel zum ersten Schenkel 9 ausgerichtet ist. Der Neigungswinkel α ist näherungsweise 0°. In dieser Konfiguration kann die Anordnung des primären Flächengebildes 1 mit dem daran befestigten Randorgan 3 einfach und ohne Wellenbildung auf eine quer zur Längsrichtung des Randorgans 3 angeordnete Wickelwelle aufgewickelt werden. Die Figuren 3 und 4 zeigen vergrösserte Querschnitte der Anordnungen in den Figuren 1 und 2.

Die Stärke bzw. Dicke D1 des primären Flächengebildes 1 ist bei einem Markisentuch in der Regel kleiner als 1mm. Sie kann z.B. im Bereich von etwa 0.4mm bis etwa 0.6mm liegen. Bei Vernachlässigung von Klebstoffschichten, deren Dicke z.B. in der Grössenordnung von 0.05mm oder weniger liegen kann, entspricht die Dicke D4 des zweiten Schenkels 11 des Randorgans 3 im Wesentlichen der Dicke D5 der Einlage 7 zuzüglich dem Zweifachen der Dicke D2 des sekundären Flächengebildes 5. Die Dicke D4 des zweiten Schenkels 11 kann in der Grössenordnung der Dicke D1 des primären Flächengebildes 1 liegen und ist vorzugsweise kleiner oder gleich gross wie D1. Die maximale Dicke D11 des Randorgans 3 in der Konfiguration gemäss Figur 4 mit parallel ausgerichteten Schenkeln 9, 11 ist bei solchen Anordnungen vorzugsweise kleiner oder gleich gross wie die Dicke D1 des primären Flächengebildes D1 zuzüglich dem Zweifachen der Dicke D2 des sekundären Flächengebildes 5. Für die Anwendung bei einem Markisentuch liegt die Dicke D2 des sekundären Flächengebildes 5 zumindest im Überlappungsbereich mit dem Markisentuch in der Grössenordnung von 0.1mm oder weniger. Da bei solchen Ausführungsformen jeweils zwei Lagen des sekundären Flächengebildes 5 überlappend mit dem Randabschnitt des primären Flächengebildes 1 verbunden sind, ist die maximale Dicke D11 des Randorgans 3 in der Konfiguration gemäss Figur 4 neben dem Überlappungsabschnitt höchstens so gross wie die Dicke der Flächengebildeanordnung im Überlappungsabschnitt.

Der zweite Schenkel 11 hat eine Breite D8, die bei einer Markise vorzugsweise in der Grössenordnung von etwa 4mm bis etwa 12mm, insbesondere im Bereich von etwa 4mm bis etwa 8mm liegt. Die Schwenkachse A1 bzw. das Filmscharnier kann wie in den Figuren 1 bis 4 dargestellt etwa in der Mitte zwischen den beiden Längsrändern des zweiten Schenkels 11 angeordnet sein. Die Breiten D6 und D7 der beiden von der Schwenkachse A1 bzw. dem Filmscharnier ausgehenden Abschnitte des zweiten Schenkels 11 sind bei solchen Randorganen 3 etwa gleich gross, nämlich D8/2. Alternativ kann der zweite Schenkel 11 auch asymmetrisch am ersten Schenkel 9 angelenkt sein. Das Filmscharnier bzw. die Schwenkachse A1 können an einer beliebigen Stelle zwischen den beiden Längsrändern des zweiten Schenkels 11 angeordnet sein. Das Randorgan 3 kann so entsprechend der Gegebenheiten bei unterschiedlichen Anwendungen ausgebildet werden. So eignet sich z.B. ein asymmetrisches Randorgan 3 mit unterschiedlichen Abschnittsbreiten D6 und D7 des zweiten Schenkels 11 zum Führen in einer Führungsschiene 13, mit einem asymmetrisch angeordneten Führungsspalt 14.

Die Breite D10 des ersten Schenkels 9 wird vorzugsweise so bemessen, dass ein an den zweiten Schenkel 11 angrenzender Abschnitt dieses ersten Schenkels 9 eine Breite D9 aufweist, die mindestens so gross ist wie die Breite D6 oder die Breite D7 des jeweiligen Abschnitts des zweiten Schenkels 11, der in der umgeklappten Konfiguration am ersten Schenkel 9 anliegt, und dass ein ausreichend breiter Endabschnitt des ersten Schenkels 9 zum Verbinden mit dem primären Flächengebilde 1 verfügbar ist.

Bei einem Randorgan 3, dessen zweiter Schenkel 11 eine Breite D8 von 4mm mit zwei Abschnitten der Breiten D6 = D7 = 2mm umfasst, kann die Breite D9 z.B. etwa 2.5mm sein und die gesamte Breite D10 des ersten Schenkels 9 in der Grössenordnung von beispielsweise etwa 8mm bis etwa 12mm liegen. Solche Randorgane 3 sind im Vergleich zur Breite von Tuchbahnen einer Markise sehr schmal und kaum sichtbar. Das sekundäre Flächengebilde 5 kann zumindest im Bereich des ersten Schenkels 9 für sichtbares Licht nahezu intransparent ausgebildet sein. Bei Verdunkelungsanlagen kann deshalb auch im Randbereich zwischen dem primären Flächengebilde 1 und angrenzenden Führungsschienen 13 kein Licht durchscheinen.

Bei Anordnungen gemäss den Figuren 1 bis 4 entspricht das Niveau des zweiten Schenkels 9 etwa einem mittleren Niveau zwischen den beiden Oberflächen des primären Flächengebildes 1. Der Randbereich des oberen Abschnitts 5a des sekundären Flächengebildes 5 überlappt mit der oberen Oberfläche des primären Flächengebildes 1, der Randbereich des unteren Abschnitts 5b mit der unteren Oberfläche.

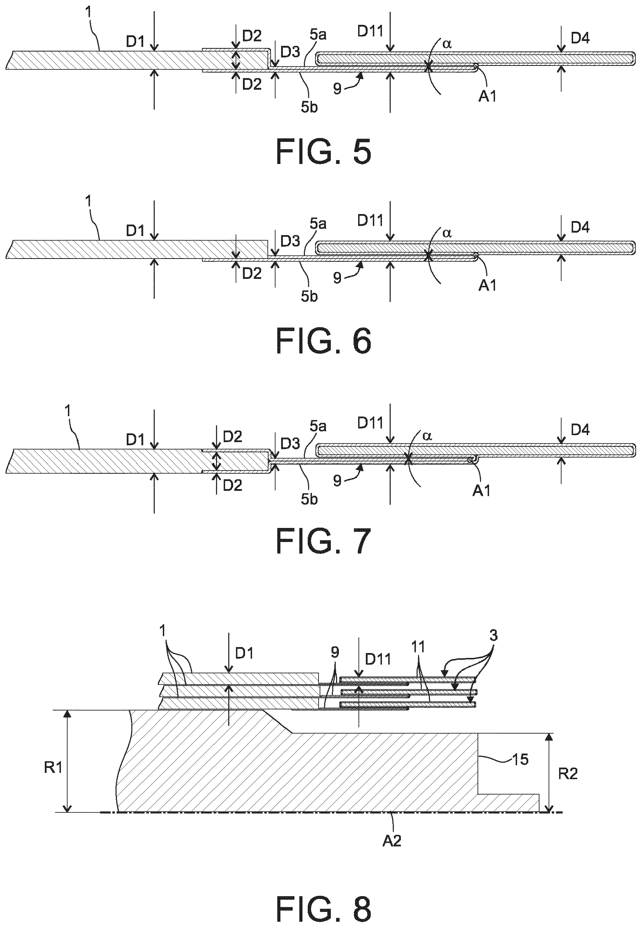

Die Anordnung gemäss Figur 5 unterscheidet sich von jener in Figur 4 dadurch, dass das mittlere Niveau des zweiten Schenkels 9 etwa jenem der unteren Oberfläche des primären Flächengebildes 1 entspricht.

Die Anordnung gemäss Figur 6 unterscheidet sich von jener in Figur 5 dadurch, dass der obere Abschnitt 5a des sekundären Flächengebildes 5 kürzer ist als der untere Abschnitt 5b, sodass er nicht mit primären Flächengebilde 1 überlappt. Nur der untere Abschnitt 5b überlappt mit der unteren Oberfläche des primären Flächengebildes 1 und ist mit dieser verbunden. Alternativ könnten auch beide Abschnitte 5a, 5b gleich breit und gemeinsam nur an einer der Oberflächen mit dem primären Flächengebilde 1 verbunden sein (nicht dargestellt). Bei der Herstellung solcher Flächengebildeanordnungen kann das sekundäre Flächengebilde 5 vergleichsweise einfach mit dem primären Flächengebilde 1 verbunden werden.

Die Anordnung in Figur 7 unterscheidet sich von jener in Figur 4 dadurch, dass die mit den jeweiligen Oberflächen des primären Flächengebildes 1 überlappenden Randbereiche des sekundären Flächengebildes 5 zumindest näherungsweise bündig zum jeweils angrenzenden Oberflächenabschnitt des primären Flächengebildes 1 angeordnet sind. Dies kann z.B. dadurch erreicht werden, dass das primäre Flächengebilde 1 und das sekundäre Flächengebilde 5 im gemeinsamen Überlappungsbereich mittels Ultraschallenergie miteinander verschweisst werden. Bei alternativen Ausführungsformen könnte das primäre Flächengebilde 1 im Überlappungsbereich eine gegenüber der Dicke D1 reduzierte Dicke aufweisen. Figur 8 zeigt ein Detailschnittbild einer Anordnung von drei auf eine Wickelwelle 15 aufgewickelten Lagen eines primären Flächengebildes 1 und eines im Randbereich mit diesem primären Flächengebilde 1 verbundenen Randorgans 3. Die Wickelwelle 15 definiert eine Wickelachse A2 und ist um diese Wickelachse A2 drehbar gelagert. Das Randorgan 3 ist in einer Konfiguration mit parallel zum primären Flächengebilde 1 und zum ersten Schenkel 9 ausgerichtetem zweiten Schenkel 11 quer zur Wickelachse A2 gemeinsam mit dem primären Flächengebilde 1 auf die Wickelwelle 15 aufgewickelt. Die aufgewickelten Lagen des primären Flächengebildes 1 liegen aneinander an. Da die maximale Dicke D11 des Randorgans 3 in dieser Konfiguration kleiner ist als die Dicke D1 des primären Flächengebildes 1, haben benachbarte Windungen bzw. Lagen des Randorgans 3 etwas Spielraum. Die Wickelwelle 15 kann im Bereich der aufzuwickelnden Flächengebildeanordnung einen einheitlichen Wickelwellenradius R1 aufweisen. Alternativ kann die Wickelwelle 15 wie in Figur 8 dargestellt in den Endbereichen bzw. in den Randbereichen der aufzuwickelnden Flächengebildeanordnung einen Radius R2 aufweisen, der kleiner ist als der Wickelwellenradius R1 im zentralen Bereich. Solche Wickelwellen 15 werden üblicherweise zum Aufwickeln von herkömmlichen Markisentüchern mit dickeren Rändern verwendet.

Figur 9 zeigt einen Detailquerschnitt eines Flächengebildes 1, das mittels eines Randorgans 3 in einer Führungsschiene 13 führbar gehalten ist. Die Führungsschiene 13 umfasst ein im Querschnitt C-förmiges Führungsprofil 16, das einen Führungsraum begrenzt und einen Führungsspalt 14 aufweist, durch den der erste Schenkel 9 des Randorgans 3 hindurchgeführt ist. Der zweite Schenkel 11 des Randorgans 3 ist innerhalb des Führungsraums quer zum ersten Schenkel 9 ausgerichtet. Beim Ausüben einer Zugkraft in Richtung des Pfeils F auf den ersten Schenkel 9 liegt der zweite Schenkel 11 beidseits des Führungsspalts 14 innenseitig am Führungsprofil 16 an. Das Randorgan 3 hält das Flächengebilde 1 formschlüssig und in Längsrichtung des Führungsprofils 16 verschiebbar an der Führungsschiene 13. Die Einlage 7 verleiht dem zweiten Schenkel 11 eine erhöhte Biegesteifigkeit und begünstigt diese Effekte. Selbst bei Randorganen 3 mit schmalen zweiten Schenkeln 11 in der Grössenordnung von wenigen Millimetern können z.B. bei Markisen Abschnitte des Randorgans 3 mit einer Länge von 5cm problemlos mit in Richtung des Pfeils F wirkenden Zugkräften in der Grössenordnung von 300N belastet werden. Die Breite D12 des Führungsspaltes 14 kann vergleichsweise schmal sein. Sie ist vorzugsweise in der Grössenordnung des Ein- bis Zweifachen der maximalen Dicke D11 des Randorgans 3 in der Konfiguration mit parallel angeordneten Schenkeln 9, 11. Die Breite D13 und Tiefe D14 des Führungsraums können entsprechend der Abmessungen des zweiten Schenkels 11 des Randorgans 3 vergleichsweise klein sein. Insbesondere können die Abmessungen des Randorgans 3 und des Führungsraums so aufeinander abgestimmt sein, dass der zweite Schenkel 11 des Randorgans 3 in der Konfiguration mit parallel angeordneten Schenkeln 9, 11 im Bereich der Führungsschiene 13 durch den Führungsspalt 14 vollständig in den Führungsraum eingeführt werden kann. Danach wird der zweite Schenkel 11 z.B. durch elastische Rückstellkräfte des Randorgans 3 und/oder durch externe Krafteinwirkungen auf das Randorgan 3 geschwenkt. Schon nach einer geringfügigen Änderung des von den Schenkeln 9, 11 eingeschlossenen Neigungswinkels α wird dieser zweite Schenkel 11 beim Ausüben einer Zugkraft auf den ersten Schenkel 9 in Richtung des Pfeils F durch innenseitige Anlage am Führungsprofil 16 vollständig in die in Figur 9 dargestellte Haltelage geschwenkt.

Bei einem Randorgan 3, bei dem ein Längsrand des zweiten Schenkels 11 an einem Längsrand des ersten Schenkels 9 angelenkt ist (L-förmige Ausführung), kann der Bereich mit diesem zweiten Schenkel 11 in analoger Weise durch den Führungsspalt 4 in den Führungsraum einer Führungsschiene 13 eingeführt werden. Zum Halten und Führen eines solchen Randorgans 3 in der Führungsschiene 13 genügt in der Regel bereits ein vergleichsweise kleiner Neigungswinkel α von beispielsweise etwa 5° bis etwa 45°. Vorzugsweise umfassen Führungsschienen 13 bei solchen Anordnungen ein Profil mit einem optimierten Querschnitt, welches den zweiten Schenkel 11 beim Ausüben eine Zugkraft in Richtung des Pfeils F auf den ersten Schenkel 9 sicher im Führungsraum zurückhält. Dies kann beispielsweise dadurch erreicht werden, dass die an den Führungsspalt 14 angrenzenden Endabschnitte des Führungsprofils 16 zum Führungsraum hin geneigt angeordnet sind (nicht dargestellt).

Benachbart zu einer Wickelwelle 15 hat das Führungsprofil ein offenes Ende. Beim Auf- bzw. Abwickeln der Flächengebildeanordnung wechselt das Randorgan 3 in einem Übergangsbereich zwischen dem Führungsprofil 16 und der Wickelwelle 15 aufgrund der wirkenden Torsionskräfte seine Konfiguration. Beim auf die Wickelwelle 15 aufgewickelten Abschnitt des Randorgans 3 sind dessen Schenkel 9, 11 parallel ausgerichtet.

Die Flächengebildeanordnungen können auch auf Wickelwellen 15 mit vergleichsweise kleinen Durchmessern aufgewickelt werden. Führungsschienen 13 zum Halten und Führen solcher Flächengebildeanordnungen können einfach und mit vergleichsweise kleinen Abmessungen ausgebildet sein. Der Planungsspielraum bei Anlagen mit solchen Flächengebildeanordnungen ist vergleichsweise gross.

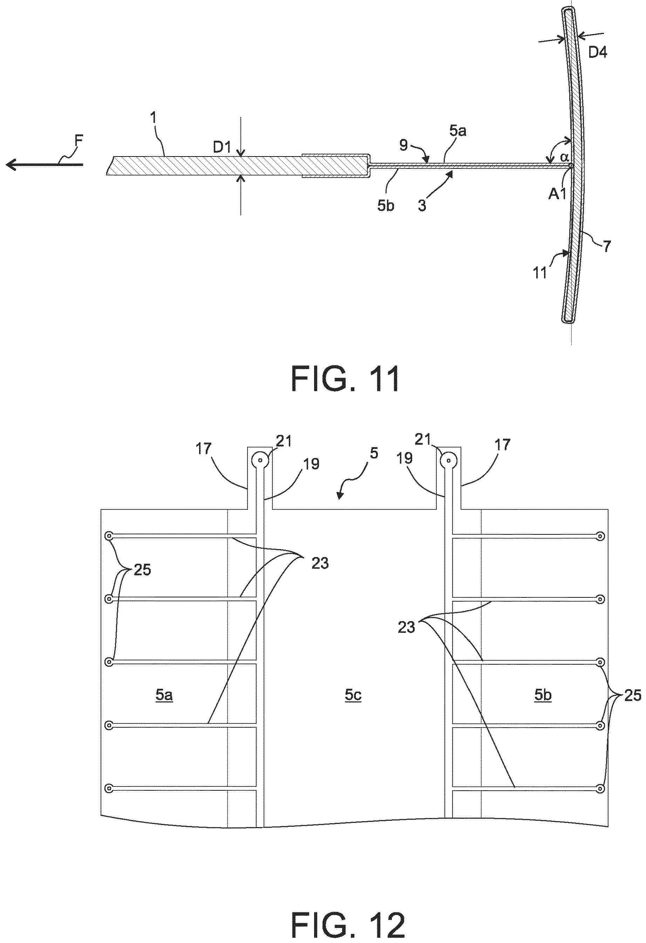

Die Figuren 10 und 11 zeigen Querschnitte von alternativen Ausführungsformen des Randorgans 3, wobei der zweite Schenkel 11 in einer Ruhelage ohne Einwirkung äusserer Kräfte leicht konvex bzw. konkav gewölbt ist. Dies kann z.B. durch eine entsprechend gewölbte Einlage 7 mit ausreichender Biegesteifigkeit bewirkt werden. Insbesondere bei Ausführungsformen mit konkav gewölbtem zweitem Schenkel 11 gemäss Figur 11 hat die Einlage 7 eine Federwirkung, die beim Ausüben von Zugkräften in Richtung F des ersten Schenkels 9 kleine Bewegungen des Flächengebildes 1 entgegen der wirkenden Federkraft ermöglicht. Dies erleichtert z.B. das Befestigen eines Markisentuchs an zwei sich gegenüberliegenden Führungsschienen 13. Zudem können Randorgane 3 mit solchen federelastisch verformbaren zweiten Schenkeln 11 bautechnische Toleranzen der Breite zwischen zwei sich gegenüberliegenden Führungsschienen 13 ausgleichen. Alternativ oder zusätzlich könnte auch der erste Schenkel 9 des Randorgans 3 oder ein Abschnitt dieses ersten Schenkels 9 bei mindestens einem der Randorgane 3 einer Flächengebildeanordnung bezüglich Zugbelastungen in Richtung des Pfeils F elastisch dehnbar ausgebildet sein.

Figur 12 zeigt einen Ausschnitt des Endbereichs eines sekundären Flächengebildes 5, bevor dieses durch Umschlagen und Verkleben mit einer Einlage 7 zu einem Randorgan 3 verarbeitet wird. Die drei Abschnitte 5a, 5b und 5c sind durch punktierte Linien getrennt dargestellt. Beim fertiggestellten Randorgan 3 sind die Abschnitte 5a und 5c in einem an den Abschnitt 5c angrenzenden Abschnitt miteinander verbunden, wobei das Filmscharnier bei den punktierten Linien ausgebildet ist. Das sekundäre Flächengebilde 5 umfasst im Endbereich zwei hervorragende Laschen 17 und in Längsrichtung durchgehende elektrische Haupteiterbahnen 19, die bei jeder Lasche 17 mit einem Kontakt 21 zum Anschliessen eines Steckerelements für einen weiterführenden elektrischen Leiter verbunden sind. Das sekundäre Flächengebilde 5 umfasst eine oder mehrere vorzugsweise in gleichmässigen Abständen quer zu den Hauptleiterbahnen 19 angeordnete und mit diesen verbundene Verzweigungsleiterbahnen 23. Diese sind in den Endbereichen der seitlichen Abschnitte 5a bzw. 5b des sekundären Flächengebildes 5 mit Kontakten 25 zum Herstellen von elektrischen Verbindungen im Bereich des primären Flächengebildes 1 verbunden. Bei alternativen Ausführungsformen kann das sekundäre Flächengebilde 5 bei einem oder an beiden Endbereichen je nur eine oder mehrere Laschen 17 umfassen. Bei jeder Lasche 17 können eine oder mehrere Leiterbahnen 19 mit entsprechenden Kontakten 21 vorgesehen sein, die analog zu Kontakten eines Flexprints z.B. direkt mit Klemmkontakten verbunden werden können.

## Patentansprüche

1. Flächengebildeanordnung umfassend ein flexibles primäres Flächengebilde (1) und mindestens ein Randorgan (3), das entlang eines Randabschnittes des primären Flächengebildes (1) mit diesem primären Flächengebilde (1) verbunden ist, wobei
das Randorgan (3) ein bandartiges sekundäres Flächengebilde (5) und eine Einlage (7) umfasst, wobei
das sekundäre Flächengebilde (5) zusammen mit der Einlage (7) eine Struktur mit zwei Schenkeln (9, 11) definiert, **dadurch gekennzeichnet,**
**dass** der zweite Schenkel (11) einen quer zur Längsrichtung des sekundären Flächengebildes (5) um die Einlage (7) geschlungenen Abschnitt (5c) des sekundären Flächengebildes (5) umfasst und der erste Schenkel (9) daran angrenzende Abschnitte (5a, 5b) des sekundären Flächengebildes (5), wobei der zweite Schenkel (11) um eine in Längsrichtung der beiden Schenkel (9, 11) verlaufende gemeinsame Schwenkachse (A1) schwenkbar mit dem ersten Schenkel (9) verbunden ist, wobei die Schwenkachse (A1) bei einem der Längsränder des ersten Schenkels (9) und zwischen den Längsrändern des zweiten Schenkels (11) angeordnet ist, und wobei der zweite Schenkel (11) in eine aufrollbare Lage schwenkbar ist, in der er im Wesentlichen parallel zum ersten Schenkel (9) ausgerichtet ist.

2. Flächengebildeanordnung nach Anspruch 1, **dadurch gekennzeichnet, dass** das sekundäre Flächengebilde (5) ein Gewebe, eine Folie, ein Laminat oder eine Kombination aus mindestens zwei dieser Elemente umfasst.

3. Flächengebildeanordnung nach einem der Ansprüche 1 oder 2, **dadurch gekennzeichnet, dass** die Dicke (D4) des zweiten Schenkels (11) des sekundären Flächengebildes (5) kleiner oder gleich gross ist wie die Dicke (D1) des primären Flächengebildes (1).

4. Flächengebildeanordnung nach einem der Ansprüche 1 bis 3, **dadurch gekennzeichnet, dass** die Dicke (D2) des sekundären Flächengebildes (5) kleiner oder gleich gross ist wie ein Viertel der Dicke (D1) des primären Flächengebildes (1).

5. Flächengebildeanordnung nach einem der Ansprüche 1 bis 4, **dadurch gekennzeichnet, dass** das primäre Flächengebilde (1) ein Markisentuch ist, und dass an zwei sich gegenüberliegenden Randabschnitten des Markisentuchs je ein Randorgan (3) befestigt ist.

6. Flächengebildeanordnung nach einem der Ansprüche 1 bis 5, **dadurch gekennzeichnet, dass** jedes Randorgan (3) mit dem primären Flächengebilde (1) verbunden ist, indem mindestens einer der Endabschnitte dieses sekundären Flächengebildes (5) überlappend mit jeweils einer der Oberflächen des primären Flächengebildes (1) angeordnet und mit diesem verklebt und/oder verschweisst ist.

7. Flächengebildeanordnung nach einem der Ansprüche 1 bis 6, **dadurch gekennzeichnet, dass** die Einlage (7) einen flachen oder gewölbten Bandkörper aus Metall Kunststoff umfasst, dessen Biegesteifigkeit grösser ist als jene des sekundären Flächengebildes (5).

8. Flächengebildeanordnung nach einem der Ansprüche 1 bis 7, **dadurch gekennzeichnet, dass** die Einlage (7) einen elektrisch leitenden Draht umfasst.

9. Flächengebildeanordnung nach einem der Ansprüche 1 bis 8, **dadurch gekennzeichnet, dass** das sekundäre Flächengebilde (5) elektrische Leiterbahnen (19, 23) umfasst, die mit elektrischen Kontakten (21, 25) verbunden sind.

10. Flächengebildeanordnung nach Anspruch 9, **dadurch gekennzeichnet, dass** das sekundäre Flächengebilde (5) bei einem oder beiden Endbereichen je eine oder mehrere hervorragende Laschen (17) umfasst, und dass an mindestens einer dieser Laschen (17) mindestens ein Kontakt (21) und eine damit verbundene Leiterbahn (19) angeordnet sind.

## Claims

1. A flat article assembly comprising a flexible primary flat article (1) and at least one edge member (3), which is connected to said primary flat article (1) along an edge portion of the primary flat article (1),
the edge member (3) having a strip-like secondary flat article (5) and an insert (7),
wherein the secondary flat article (5), together with the insert (7), defines a structure having two limbs (9, 11),
**characterized in that** the second limb (11) comprises a portion (5c) of the secondary flat article (5), said portion being wrapped around the insert (7) transversely to the longitudinal direction of the secondary flat article (5), and the first limb (9) has portions (5a, 5b) of the secondary flat article (5) that are adjacent thereto, the second limb (11) being connected to the first limb (9) so as to be pivotable about a shared pivot axis (A1) extending in the longitudinal direction of the two limbs (9, 11), the pivot axis (A1) being arranged at one of the longitudinal edges of the first limb (9) and between the longitudinal edges of the second limb (11), the second limb (11) being pivotable into a roll-up position in which said limb (11) is oriented substantially in parallel with the first limb (9).

2. The flat article assembly according to Claim 1, **characterized in that** the secondary flat article (5) comprises a fabric, a foil, a laminate or a combination of at least two of said elements.

3. The flat article assembly according to any one of Claims 1 or 2, **characterized in that** the thickness (D4) of the second limb (11) of the secondary flat article (5) is smaller than or equal to the thickness (D1) of the primary flat article (1).

4. The flat article assembly according to any one of Claims 1 to 3, **characterized in that** the thickness (D2) of the secondary flat article (5) is smaller than or equal to a quarter of the thickness (D1) of the primary flat article (1) .

5. The flat article assembly according to any one of Claims 1 to 4, **characterized in that** the primary flat article (1) is an awning fabric, and **in that** an edge member (3) is fastened to each two opposite edge portions of the awning fabric.

6. The flat article assembly according to any one of Claims 1 to 5, **characterized in that** each edge member (3) is connected to the primary flat article (1) by at least one of the end portions of said secondary flat article (5) each being arranged so as to overlap one of the surfaces of the primary flat article (1) and being bonded and/or welded thereto.

7. The flat article assembly according to any one of Claims 1 to 6, **characterized in that** the insert (7) comprises a flat or curved strip element made of metal or plastics, the flexural rigidity thereof being greater than that of the secondary flat article (5).

8. The flat article assembly according to any one of Claims 1 to 7, **characterized in that** the insert (7) comprises an electrically conductive wire.

9. The flat article assembly according to any one of Claims 1 to 8, **characterized in that** the secondary flat article (5) comprises electrical conductor tracks (19, 23), which are connected to electrical contacts (21, 25).

10. The flat article assembly according to Claim 9, **characterized in that** the secondary flat article (5), at each of one or both end regions, has one or more protruding tabs (17), and **in that** at least one contact (21) and a conductor track (19) connected thereto is located at at least one of said tabs (17).

## Revendications

1. Agencement de structure plate comprenant une structure plate primaire (1) souple et au moins un organe de bord (3), lequel est relié avec cette structure plate primaire (1) le long d'une section de bord de la structure plate primaire (1),
l'organe de bord (3) comprenant une structure plate secondaire (5) de type bande et un élément d'insertion (7),
la structure plate secondaire (5) conjointement avec l'élément d'insertion (7) définissant une structure avec deux ailes (9, 11),
**caractérisé en ce que** la deuxième aile (11) comprend une section (5c) enroulée autour de l'élément d'insertion (7) transversalement à la direction longitudinale de la structure plate secondaire (5) et **en ce que** la première aile (9) comprend des sections (5a, 5b) de la structure plate secondaire (5) étant adjacentes, la deuxième aile (11) étant reliée de façon pivotante avec la première aile (9) sur un axe de pivotement (A1) commun s'étendant dans la direction longitudinale des deux ailes (9, 11), l'axe de pivotement (A1) étant disposé au niveau de l'un des bords longitudinaux de la première aile (9) et entre les bords longitudinaux de la deuxième aile (11), et la deuxième aile (11) pouvant pivoter dans une position enroulable, dans laquelle elle est orientée de façon essentiellement parallèle à la première aile (9).

2. Agencement de structure plate selon la revendication 1, **caractérisé en ce que** la structure plate secondaire (5) comprend un tissu, un film, un laminé ou une combinaison d'au moins deux de ces éléments.

3. Agencement de structure plate selon l'une quelconque des revendications 1 ou 2, **caractérisé en ce que** l'épaisseur (D4) de la deuxième aile (11) de la structure plate secondaire (5) est inférieure ou égale à l'épaisseur (D1) de la structure plate primaire (1).

4. Agencement de structure plate selon l'une quelconque des revendications 1 à 3, **caractérisé en ce que** l'épaisseur (D2) de la structure plate secondaire (5) est inférieure ou égale à un quart de l'épaisseur (D1) de la structure plate primaire (1).

5. Agencement de structure plate selon l'une quelconque des revendications 1 à 4, **caractérisé en ce que** la structure plate primaire (1) est une toile de store, et **en ce que** respectivement un organe de bord (3) est fixé sur deux sections de bord de la toile de store opposées l'une à l'autre.

6. Agencement de structure plate selon l'une quelconque des revendications 1 à 5, **caractérisé en ce que** chaque organe de bord (3) est relié avec la structure plate primaire (1), au moins une des sections d'extrémité de cette structure plate secondaire (5) étant disposée en se chevauchant avec respectivement une des surfaces de la structure plate primaire (1), et étant collée et/ou soudée avec celle-ci.

7. Agencement de structure plate selon l'une quelconque des revendications 1 à 6, **caractérisé en ce que** l'élément d'insertion (7) comprend un corps de bande plat ou incurvé en métal ou plastique, dont la rigidité en flexion est supérieure à celle de la structure plate secondaire (5).

8. Agencement de structure plate selon l'une des revendications 1 à 7, **caractérisé en ce que** l'élément d'insertion (7) comprend un fil électriquement conducteur.

9. Agencement de structure plate selon l'une quelconque des revendications 1 à 8, **caractérisé en ce que** la structure plate secondaire (5) comprend des pistes conductrices électriques (19, 23), lesquelles sont connectées à des contacts électriques (21, 25).

10. Agencement de structure plate selon la revendication 9, **caractérisé en ce que** la structure plate secondaire (5) comprend respectivement une ou plusieurs languettes (17) faisant saillie, au niveau d'une zone d'extrémité ou des deux zones d'extrémité, et **en ce qu'**au moins un contact (21) et une piste conductrice (19) reliée avec celui-ci sont disposés sur au moins une de ces languettes (17).
